# EUROPÄISCHE PATENTSCHRIFT

(11) **EP 2 508 772 B1**
(45) Veröffentlichungstag und Bekanntmachung des Hinweises auf die Patenterteilung: **04.06.2014**
(21) Anmeldenummer: 12004837.6
(22) Anmeldetag: 14.08.2008
(51) Int. Cl.: F16D 25/08, F16J 15/00

(54) **Dichtungsanordnung für ein Ausrücksystem**
Seal assembly for a launching system
Dispositif d'étanchéité pour un système de débrayage

(30) Priorität: 27.08.2007 DE 102007040414
(43) Veröffentlichungstag der Anmeldung: 10.10.2012
(62) Teilanmeldung aus: 08014494.2
(73) Patentinhaber: Schaeffler Technologies GmbH & Co. KG, 91074 Herzogenaurach (DE)
(72) Erfinder: Ribeiro, Marcelo-Henrique, CEP 18051-000 Sorocaba (BR)

(56) Entgegenhaltungen:
- WO-A1-2006/136132
- DE-A1- 4 434 594
- DE-U1- 8 422 431
- JP-A- 7 332 389

## Beschreibung

Die Erfindung betrifft einen Nehmerzylinder für hydraulische Brems- oder Kupplungsanlagen, zum Beispiel in Kraftfahrzeugen, mit einem Zylindergehäuse, in dem ein Kolben hin und her bewegbar aufgenommen ist, der eine Kolbenstange aufweist, die sich durch ein Durchgangsloch aus dem Zylindergehäuse nach außen erstreckt und mit einer Dichtungsanordnung zur Abdichtung zum Zylindergehäuse oder einem Zentralausrücker mit einer an einem gehäuseförmigen Bauteil befestigten Führungshülse und einem auf dem Außendurchmesser der Führungshülse axial verschiebbaren Ringkolben, der mit seinem Innendurchmesser auf dem Außendurchmesser der Führungshülse entlang gleitet, sowie mit einer Dichtung, die zwischen einem Innendurchmesser des gehäuseförmigen Bauteils und dem Außendurchmesser der Führungshülse und einer in Richtung zum gehäuseförmigen Bauteil weisenden Stirnseite des Kolbens abdichtet.

Aus DE 10 2006 043 074 A1 ist ein Geber- oder Nehmerzylinder für hydraulische Brems- oder Kupplungsanlagen bekannt, der wie alle bisher bekannten Nehmerzylinder eine Ringdichtung aufweist, die in einem Ringspalt zwischen dem Zylindergrundkörper und der Führungshülse angeordnet ist und die eine radial nach innen abstehende, umlaufende Dichtlippe 7 aufweist. Die Dichtlippe 7 der Ringdichtung 6 liegt an der Umfangsfläche eines Kolbens 9 an, der im Zylindergehäuse 2 hin und her bewegbar aufgenommen ist.

Ein in DE 10 2006 047 300 A1 beschriebener Zentralausrücker weist ein gehäuseförmiges Bauteil auf, an dessen freier Stirnseite die Führungshülse eines Ringflansches befestigt ist. Zwischen Gehäuse und Ringflansch erfolgt eine Abdichtung mittels einer Dichtung in Form eines O-Ringes.

Die bisher verwendeten Dichtungen bestehen fast ausschließlich aus Ethylen-Propylen-DienKautschuk (EPDM). Da jedoch EPDM nicht resistent gegenüber Mineralöl ist, führt dies zum Ausfall des Ausrückers. Aus DE 43 39 652 C2 ist ein hydraulisch betätigbarer Ausrücker-Nehmerzylinder für eine Kraftfahrzeugreibungskupplung bekannt, mit dem dieses Problem beseitigt werden soll. Dazu wird die Dichtung mit einem aufwendigen Abstreifelement und einem zwischen Dichtung und Abstreifelement angeordneten Nutring kombiniert, wobei Abstreifelement und Nutring aus hydrierten Nitrilkautschuk (HNBR) hergestellt sein können. HNBR ist ein mechanisch extrem robuster, sehr universell einsetzbarer Werkstoff mit unter anderem hoher Beständigkeit gegen additivhaltige, technische Öle; geringer Dampf- und Gasdurchlässigkeit sowie einem hohen Abriebwiderstand.

Die DE 84 22 43 U1 zeigt einen Nehmerzylinder für einen Kupplungsausrücksystem, bei dem eine Kolbendichtung den Druckraum des Nehmerzylinders gegen den Austritt von beispielsweise Bremsflüssigkeit abdichtet und eine zusätzliche Dichtscheibe aus einem gegen Mineralöl beständigen Material, die auf der dem Druckraum abgewandten Seite an der Innenwandung des Kolbens angeordnet ist, so dass sich die Kolbendichtung zwischen der Dichtscheibe und dem Druckraum befindet, eine Abstreiffunktion gegenüber Verschmutzung durch Mineralöl zur Verfügung stellt.

Aufgabe der Erfindung ist es, einen Nehmerzylinder mit einer einfachen und zuverlässigen Dichtungsanordnung für ein Ausrücksystem zu entwickeln.

Diese Aufgabe wird mit den Merkmalen des ersten Patentanspruchs gelöst, vorteilhafte Ausgestaltungen ergeben sich aus den Unteransprüchen.

Bei dem Nehmerzylinder mit der Dichtungsanordnung für ein Ausrücksystem ist erfindungsgemäß eine den Bremsflüssigkeitsaustritt verhindernde erste Dichtung mit einer zweiten Dichtung aus gegen Mineralöl beständigem Material kombiniert.

Weiterhin ist es möglich, den erfindungsgemäßen Nehmerzylinder mit der Dichtungsanordnung für hydraulische Brems- oder Kupplungsanlagen vorzusehen, welcher ein Zylindergehäuse aufweist, in dem ein Kolben in einer Führungshülse hin und her bewegbar aufgenommen ist, wobei die Dichtungsanordnung die erste Dichtung und die zweite Dichtung aufweist, die in Richtung zum Zylindergehäuse abdichten. Dabei ist vorzugsweise die erste Dichtung zwischen dem Außendurchmesser des Kolbens und dem Zylindergehäuse (in Richtung zum Druckmittelbeaufschlagbahren Druckraum) und die zweite Dichtung zwischen dem Außendurchmesser der Führungshülse und dem Zylindergehäuse diese zueinander abdichtend angeordnet.

Die erste Dichtung und die zweite Dichtung sind voneinander beabstandet angeordnet, wobei zwischen diese ein nach außen weisender erster Absatz der Führungshülse greift

Zusätzlich schließt sich an das der ersten Dichtung abgewandte Ende der zweiten Dichtung ein nach außen weisender zweiter Absatz der Führungshülse an.

Die erste Dichtung besteht bevorzugt aus EPDM und die zweite Dichtung aus HNBR. Es ist möglich, die erste und/oder zweite Dichtung in Form eines O-Rings auszubilden.

Mit der erfindungsgemäßen Lösung wird ein Nehmerzylinder mit einer einfachen und zuverlässigen Doppeldichtung geschaffen, wobei die Dichtungsanordnung den Austritt von Bremsflüssigkeit verhindert und gegen Mineralöl resistent ist.

Die Erfindung wird nachfolgend anhand von Ausführungsbeispielen und zugehörigen Zeichnungen näher erläutert. Es zeigen:
Fig. 1: Dichtungsanordnung in einem Zentralausrücker, der nicht Gegenstand der Erfindung ist
Fig. 2: Dichtungsanordnung in einem Nehmerzylinder.

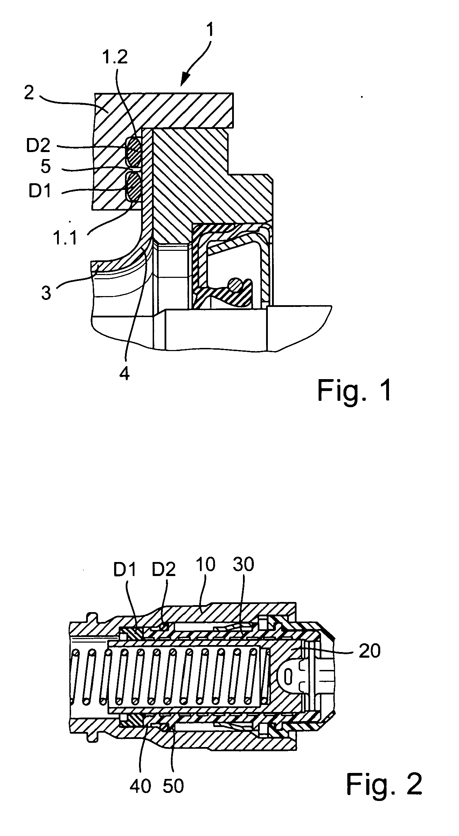

In Figur 1 ist eine in einen Zentralausrücker 1 für hydraulische Brems- oder Kupplungsanlagen integrierte Dichtungsanordnung dargestellt, die nicht Gegenstand der Erfindung ist. Der Zentralausrücker 1 weist ein Gehäuse 2 auf, an dessen freier Stirnseite 2.1 eine Führungshülse 3 mit einem Ringflansch 4 befestigt ist. Zwischen Gehäuse 2 und Ringflansch 4 erfolgt die Abdichtung durch die Anordnung der ersten Dichtung D1 und der zweiten Dichtung D2, wobei die erste Dichtung D1 radial innen in einer ersten Nut 1.1 des Gehäuses 1 und die zweite Dichtung D2 radial außen in einer zweiten Nut 1.2 des Gehäuses 1 sitzt. Dadurch wird zwischen beiden Dichtungen D1, D2 eine gehäuseseitige Wand 5 gebildet. Beide Dichtungen D1 und D2 sind in Form eines O-Ringes ausgebildet und dichten zum Ringflansch 4 ab. Der erste Dichtung D1 besteht aus EPDM und die zweite Dichtung D2 aus HNBR.

Die Gestaltung der Dichtungsanordnung in einem Nehmerzylinder ist in Fig. 2 dargestellt. Der Nehmerzylinder weist ein Zylindergehäuse 10 auf, in dem ein Kolben 20 in einer Führungshülse 30 hin und her bewegbar aufgenommen ist. Die erste Dichtung D1 besteht aus EPDM und dichtet zwischen Kolben 20 und Zylindergehäuse 10 ab, die zweite Dichtung D2 besteht aus HNBR und ist zwischen Führungshülse 30 und Zylindergehäuse 10 diese zueinander abdichtend angeordnet. Zwischen der ersten Dichtung D1 und der zweiten Dichtung D2 ist ein nach außen weisender erster Absatz 40 der Führungshülse 30 angeordnet und an das der ersten Dichtung D1 abgewandte Ende der zweiten Dichtung D2 schließt sich ein nach außen weisender zweiter Absatz 50 der Führungshülse 30 an. Der erste und der zweite Absatz sind bevorzugt radial umlaufend ausgebildet. Die erste Dichtung D1 ist in Form einer radial umlaufenden Lippendichtung und die zweite Dichtung D2 in Form eines O-Rings ausgebildet.

Ein wesentlicher Vorteil der beiden Ausführungsbeispiele besteht darin, dass bei der erfindungsgemäßen Doppeldichtung in Richtung zum druckmittelbeaufschlagten Druckraum zuerst die erste Dichtung aus EPDM und danach die zweite Dichtung aus HNBR angeordnet ist.

Dadurch wird erstmalig eine einfache und zuverlässig Lösung geschaffen, die den Austritt von Bremsflüssigkeit aus dem Ausrücksystem durch die erste Dichtung aus EPDM und den Mineralöleingang in das Ausrücksystem durch die zweite Dichtung aus HNBR verhindert, wodurch die Lebensdauer entsprechender Systeme wesentlich verbessert wird.

## Patentansprüche

1. Nehmerzylinder für hydraulische Brems- oder Kupplungsanlagen, welcher ein Zylindergehäuse (10) aufweist, in dem ein Kolben (20) in einer Führungshülse (30) hin und her bewegbar aufgenommen ist, mit einer Dichtungsanordnung, die eine erste Dichtung (D1) und eine zweite Dichtung (D2) aufweist und in Richtung zum Zylindergehäuse (10) abdichtet, wobei die erste Dichtung (D1) aus einem Bremsflüssigkeitsaustritt verhindernden Material und die zweite Dichtung (D2) aus einem gegen Mineralöl beständigen Material besteht, **dadurch gekennzeichnet, dass** die erste Dichtung (D1) zwischen dem Außendurchmesser des Kolbens (20) und dem Zylindergehäuse (10) und die zweite Dichtung (D2) zwischen dem Außendurchmesser der Führungshülse (30) und dem Zylindergehäuse (10) abdichtet.

2. Nehmerzylinder nach Anspruch 1, **dadurch gekennzeichnet, dass** zwischen der ersten Dichtung (D1) und der zweiten Dichtung (D2) ein nach außen weisender erster Absatz (40) der Führungshülse (30) angeordnet ist.

3. Nehmerzylinder nach einem der Ansprüche 1 oder 2, **dadurch gekennzeichnet, dass** sich an das der ersten Dichtung (D1) abgewandte Ende der zweiten Dichtung (D2) ein nach außen weisender zweiter Absatz (50) der Führungshülse (30) angeordnet ist.

4. Nehmerzylinder nach einem der Ansprüche 1 bis 3, **dadurch gekennzeichnet, dass** die erste Dichtung (D1) aus EPDM besteht.

5. Nehmerzylinder nach einem der Ansprüche 1 bis 4, **dadurch gekennzeichnet, dass** die zweite Dichtung (D2) aus HNBR besteht.

6. Nehmerzylinder nach einem der Ansprüche 1 bis 5, **dadurch gekennzeichnet, dass** die erste Dichtung (D1) und/oder die zweite Dichtung (D2) in Form eines O-Ringes ausgebildet ist/sind.

## Claims

1. Slave cylinder for hydraulic brake or clutch systems, which slave cylinder has a cylinder housing (10), in which a piston (20) is received in a guide sleeve (30) such that it can be moved to and fro, having a seal arrangement which has a first seal (D1) and a second seal (D2) and seals in the direction of the cylinder housing (10), the first seal (D1) being composed of a material which prevents the escape of brake fluid and the second seal (D2) being composed of a material which is resistant to mineral oil, **characterized in that** the first seal (D1) seals between the external diameter of the piston (20) and the cylinder housing (10) and the second seal (D2) seals between the external diameter of the guide sleeve (30) and the cylinder housing (10).

2. Slave cylinder according to Claim 1, **characterized in that** an outwardly pointing first shoulder (40) of the guide sleeve (30) is arranged between the first seal (D1) and the second seal (D2).

3. Slave cylinder according to either of Claims 1 and 2, **characterized in that** an outwardly pointing second shoulder (50) of the guide sleeve (30) is arranged at that end of the second seal (D2) which faces away from the first seal (D1).

4. Slave cylinder according to one of Claims 1 to 3, **characterized in that** the first seal (D1) is composed of EPDM.

5. Slave cylinder according to one of Claims 1 to 4, **characterized in that** the second seal (D2) is composed of HNBR.

6. Slave cylinder according to one of Claims 1 to 5, **characterized in that** the first seal (D1) and/or the second seal (D2) are/is in the form of an O-ring.

## Revendications

1. Cylindre récepteur pour des installations hydrauliques de freinage ou d'embrayage, lequel présente un boîtier de cylindre (10), dans lequel un piston (20) est reçu de manière déplaçable en va-et-vient dans un manchon de guidage (30), comprenant un agencement d'étanchéité qui présente un premier joint d'étanchéité (D1) et un deuxième joint d'étanchéité (D2) et qui réalise l'étanchéité dans la direction du boîtier de cylindre (10), le premier joint d'étanchéité (D1) étant constitué d'un matériau empêchant la sortie de liquide de freinage et le deuxième joint d'étanchéité (D2) étant constitué d'un matériau résistant aux huiles minérales, **caractérisé en ce que** le premier joint d'étanchéité (D1) réalise l'étanchéité entre le diamètre extérieur du piston (20) et le boîtier de cylindre (10) et le deuxième joint d'étanchéité (D2) réalise l'étanchéité entre le diamètre extérieur du manchon de guidage (30) et le boîtier de cylindre (10).

2. Cylindre récepteur selon la revendication 1, **caractérisé en ce qu'**entre le premier joint d'étanchéité (D1) et le deuxième joint d'étanchéité (D2) est disposé un premier épaulement (40) du manchon de guidage (30) tourné vers l'extérieur.

3. Cylindre récepteur selon l'une quelconque des revendications 1 ou 2, **caractérisé en ce qu'**un deuxième épaulement (50) du manchon de guidage (30) tourné vers l'extérieur est disposé au niveau de l'extrémité du deuxième joint d'étanchéité (D2) opposée au premier joint d'étanchéité (D1).

4. Cylindre récepteur selon l'une quelconque des revendications 1 à 3, **caractérisé en ce que** le premier joint d'étanchéité (D1) se compose d'EPDM.

5. Cylindre récepteur selon l'une quelconque des revendications 1 à 4, **caractérisé en ce que** le deuxième joint d'étanchéité (D2) se compose d'HNBR.

6. Cylindre récepteur selon l'une quelconque des revendications 1 à 5, **caractérisé en ce que** le premier joint d'étanchéité (D1) et/ou le deuxième joint d'étanchéité (D2) est/sont réalisé(s) sous forme de joint torique.
